# EUROPEAN PATENT SPECIFICATION

(11) **EP 2 096 846 B1**
(45) Date of publication and mention of the grant of the patent: **11.12.2013**
(21) Application number: 08152118.9
(22) Date of filing: 29.02.2008
(51) Int. Cl.: H04M 1/725

(54) **User interface for custom recordable ring tones**
Benutzerschnittstelle für aufzeichenbare Klingeltöne
Interface utilisateur pour tonalités de sonneries personnalisées enregistrables

(43) Date of publication of application: 02.09.2009
(60) Divisional application: 11180341.7
(73) Proprietor: BlackBerry Limited, Waterloo, ON N2K 0A7 (CA)
(72) Inventor: Vander Veen, Raymond, Waterloo Ontario N2V 2M6 (CA); Klassen, Gerhard D, Waterloo, Ontario N2T 1H7 (CA)
(74) Representative: MERH-IP Matias Erny Reichl Hoffmann

(56) References cited:
- US-A1- 2002 119 807
- US-A1- 2002 131 564
- US-A1- 2007 123 234

## Description

The present specification relates generally to electronic devices, and in particular to a method and user interface for generating event-specific ring tones in an electronic device.

Audible reminders in the form of custom ring tones are well known for notifying a user of events such as an incoming call, appointment or task. It is also known to associate different ring tones with different categories of such events (e.g. a first ring tone for calendar reminders, a second ring tone for incoming calls, a third ring tone for incoming emails, etc.). Moreover, it is also known to use recorded voice samples as ring tones. For example, it is known in the art to record and save custom voice samples in a list of ring tones for association with different categories of events. It will be appreciated that specifying multiple event-specific ring tones can lead to user confusion since a user is only capable of memorizing a finite number of different ring tone associations.

Consequently, it is desirable to provide a mechanism for a user to specify individual electronic device reminders associated with respective events, without requiring the user to look at the device (e.g. the user may be driving a car, in which case it would be dangerous for the user to look at the device in order to see a reminder description of an event). Moreover, it is desirable to provide custom audible alarms for a multiplicity of events without requiring the user to memorize a corresponding multiplicity of associated ring tones.

US2007/123234 A1 discloses a user interface comprising first and second separate screens for associating a ring tone, which may be a recorded voice, with each contact listed in a directory of a mobile telephone.

US2002/131564 A1 discloses a portable electronic device capable of prerecording voice data for notification. A non-volatile memory stores at least one notification time, at least one notification item, and the corresponding voice data pre-recorded by the user via a microphone.

US2002/119807 A1 discloses a mobile phone with an electronic voice data book. An alarm setting and an associated voice message are stored on the mobile phone.

### GENERAL

In general, a method and user interface are set forth for associating event-specific audio recordings with specific events on an electronic device, such as a portable phone, smart phone, PDA, etc.

According to one aspect, there may be provided a method of operating an electronic device, comprising: displaying a first user interface window on said electronic device for associating an audible notification with a specific event; displaying a second user interface window within said first user interface window for activating a record function from said first user interface window for recording an audio file; and displaying a third user interface window within said first user interface window for saving said audio file as said audible notification associated with said specific event, wherein said specific event is any of a calendar appointment, an incoming call, an incoming email or a task.

According to another aspect, there may be provided a user interface for an electronic device, comprising: an input device; a first window display generated responsive to a first input to said input device for associating an audible notification with a specific event on said electronic device; a second window display generated within said first window display responsive to a second input to said input device for activating a record function to record an audio file; and a third window display generated within said first window display responsive to a third input to said input device for saving said audio file as said audible notification associated with said specific event, wherein said specific event comprises any of a calendar appointment, an incoming call, an incoming email, or a task.

### BRIEF DESCRIPTION OF THE DRAWINGS

The embodiments will be better understood with reference to the following Figures in which like numerals denote like parts and in which:

Figure 1 is a simplified block diagram of a wireless communication system;

Figure 2 is a block diagram of components of a portable electronic device;

Figures 3A- 3F are screen shot representations of a graphical user interface of the portable electronic device in Figure 2 for creating and associating an audible reminder for calendar notifications, according to an embodiment;

Figures 4A-4E are screen shot representations of a graphical user interface of the portable electronic device in Figure 2 for creating and associating an audible reminder for a new calendar appointment event, according to an embodiment;

Figures 5A and 5B are screen shot representations of a graphical user interface of the portable electronic device in Figure 2 for associating an audible reminder with an incoming call, according to an embodiment;

Figure 6, comprising Figures 6A and 6B, is a flowchart showing a method of creating and associating an audible reminder for calendar notifications, according to the embodiment of Figures 3A - 3F; and

Figure 7, comprising Figures 7A and 7B, is a flowchart showing a method of creating and associating an audible reminder for a new calendar appointment, according to the embodiment of Figures 4A- 4E.

### DESCRIPTION OF PREFERRED EMBODIMENTS

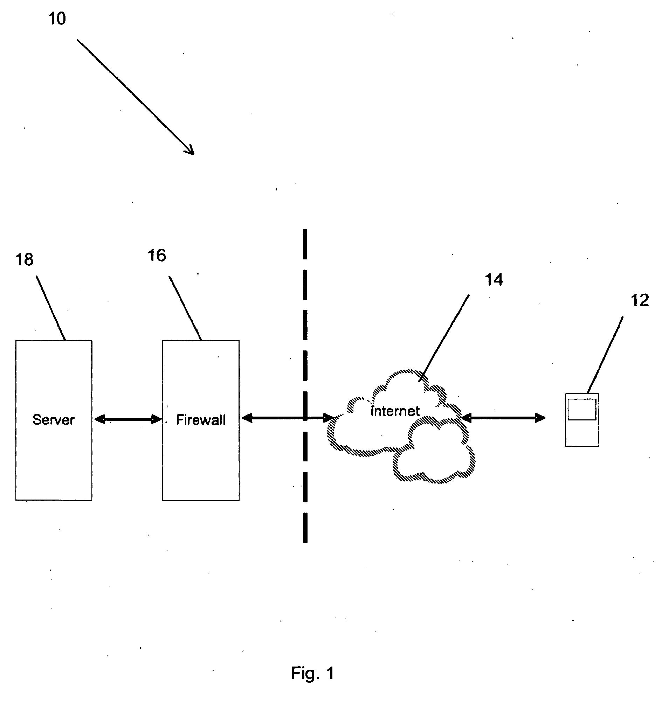

Figure 1 is a simplified block diagram of an exemplary communication system 10 for a portable electronic device 12. According to the illustrated embodiment, the portable electronic device 12 is operable to effect communications over a radio communications channel and communicates with a base station (not shown) while located within a coverage area that is defined by the base station. However, the portable electronic device 12 is not limited to a device capable of effecting communications. Indeed, the exemplary method of creating and associating audible reminders set forth in greater detail below, may advantageously be implemented within a multitude of devices, some of which are capable of communications and others of which are not (e.g. PDAs, mobile phones, smart telephones, laptop computers, etc.).

In the illustrated embodiment, the base station (not shown) is part of a wireless network that is in communication with the Internet 14. Data is delivered to the portable electronic device 12 via wireless transmission from the base station. Similarly, data is sent from the portable electronic device 12 via wireless transmission to the base station.

It will be appreciated that the portable electronic device 12 of Figure 1 is movable within a coverage area of the base stations and can be moved to coverage areas defined by other base stations. Further, as will be understood by one of ordinary skill in the art, wireless networks include GSM/GPRS, CDPD, TDMA, iDEN, Mobitex, DataTAC networks, EDGE, EVDO or UMTS and broadband networks such as Bluetooth and variants of 802.11.

A server 18 handles wireless client requests from the portable electronic device 12. A firewall, or proxy server, 16, is provided between the server 18 and the Internet 14. The server 18 further operates as a Mail Server, which communicates with an email client of the portable electronic device 12 to allow a user to send and receive email messages.

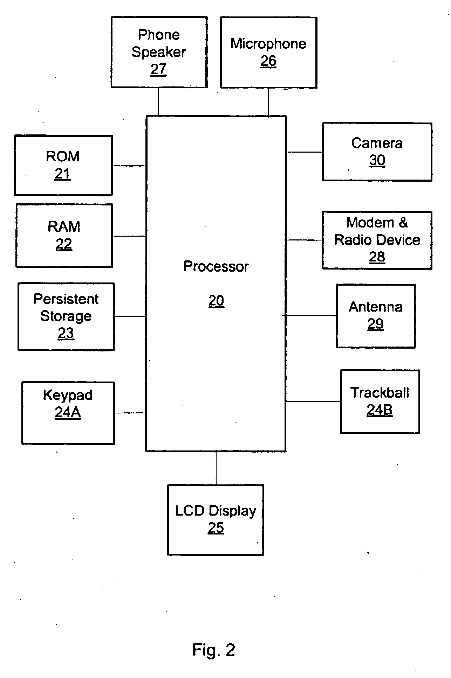

Figure 2 is a block diagram showing certain components within an exemplary embodiment of the portable electronic device 12. The portable electronic device 12 includes a processor 20 connected to a read-only-memory (ROM) 21 that contains a plurality of applications executable by the processor 20 for enabling each portable electronic device 12 to perform certain functions including, for example, Personal Identification Number (PIN) message functions, Short Message Service (SMS) message functions, address book and calendaring functions, camera functions, and cellular telephone functions. More particularly, processor 20 may execute applications within ROM 21 for notifying the user of events such as incoming call and/or emails, appointments, tasks, etc., as hereinbefore described. The processor 20 is also connected to a random access memory unit (RAM) 22 and a persistent storage device 23 to facilitate various non-volatile storage functions of the portable electronic device 12. The processor 20 receives input from one or more input devices, including a keypad 24A and trackball 24B. The processor 20 outputs to one or more output devices, including a Liquid Crystal Display (LCD) display 25. A microphone 26 and phone speaker 27 are connected to the processor 20 for cellular telephone functions. The processor 20 is also connected to a modem and radio device 28. The modem and radio device 28 is used to connect to wireless networks and transmit and receive voice and data communications through an antenna 29. A camera 30 provides functionality for taking pictures that can be viewed on display 25, sent to other users via wireless email, saved to persistent storage 23 for later viewing, etc.

In the context of this specification and the exemplary embodiment illustrated in the drawings, "user interface" comprises an input device (such as keypad 24A, trackball 24B, etc.) and at least one graphical window displayed via an output device (such as display 25).

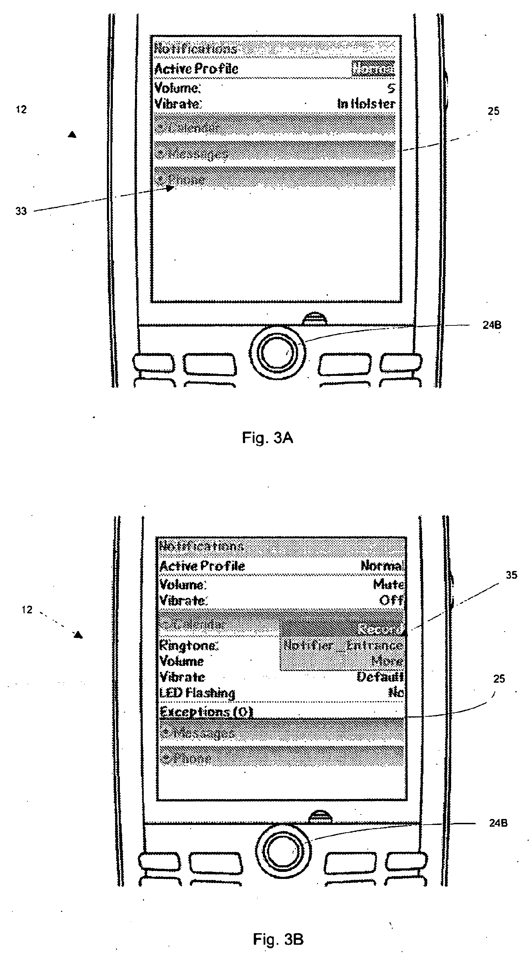

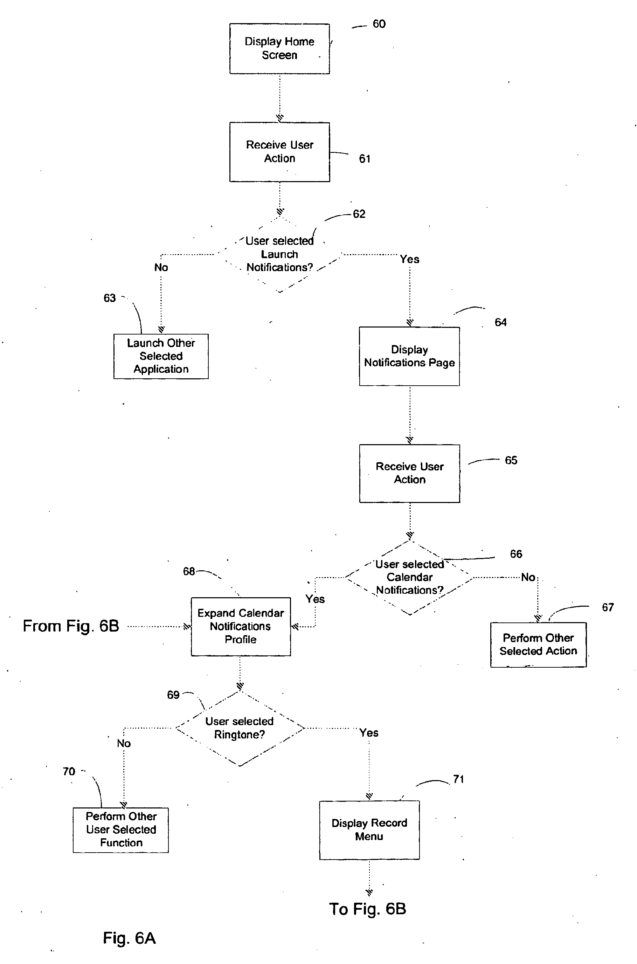

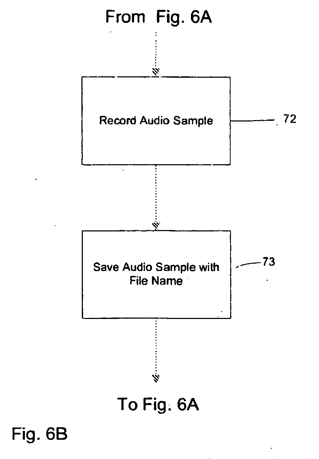

According to a first aspect of this detailed description, as shown in Figures 3A - 3F and as further depicted in Figures 6A and 6B, portable electronic device 12 may be used to create and associate a default audible notification for calendar events.

With reference to Figure 6A, in an idle or default state for device 12, a home screen window (not shown) is displayed (60) from which a user may launch various applications by selecting associated icons on display 25. Upon making a selection (61), a determination is made (62) as to whether the user has selected to launch a Notifications application. If not, the device 12 launches another application associated with the user selected icon (63). If the user has selected to launch the Notifications application, a window (33) is displayed (64) as shown in Figure 3A.

From this window, the user may select from among a plurality of device applications (e.g. Calendar, Messages, Phone, etc.) within ROM 21 and executable by processor 20, with which event notifications may be customized. In response to a further user selection (65) a determination is made (66) as to whether the user has selected to expand the Calendar Notifications profile or take some other specified action (67), such as expanding the Messages or Phone profiles, etc.

Once the Calendar Notifications profile has been expanded, the user may select a Ringtone field (a "Yes" at 69) from the expanded profile. In response, as shown in Figure 3B, a "Record" function is presented (71) from a pop-up menu (35) for selecting an existing ring tone (e.g. "Notifier_Entrance") or recording a custom audio sample (72) as a notification for all calendar events (Figure 6B). Otherwise, another selected function is performed (70).

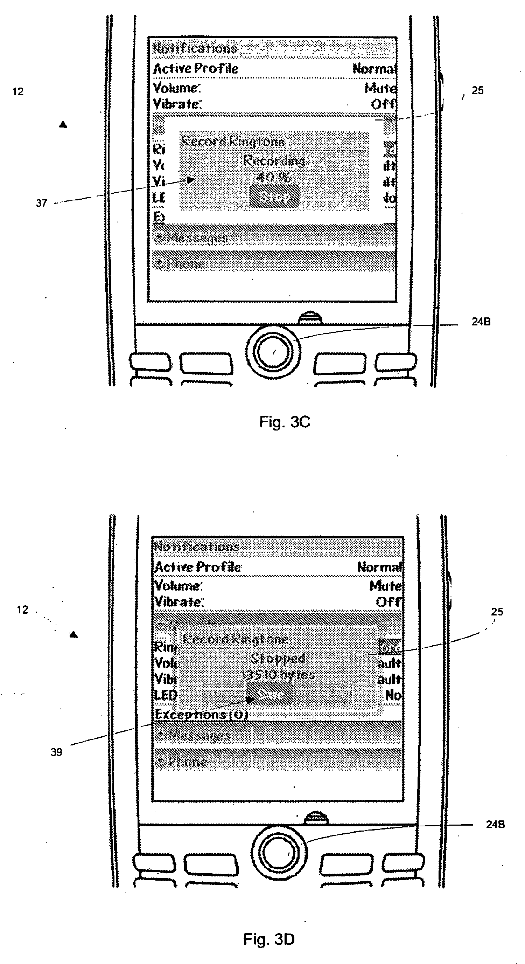

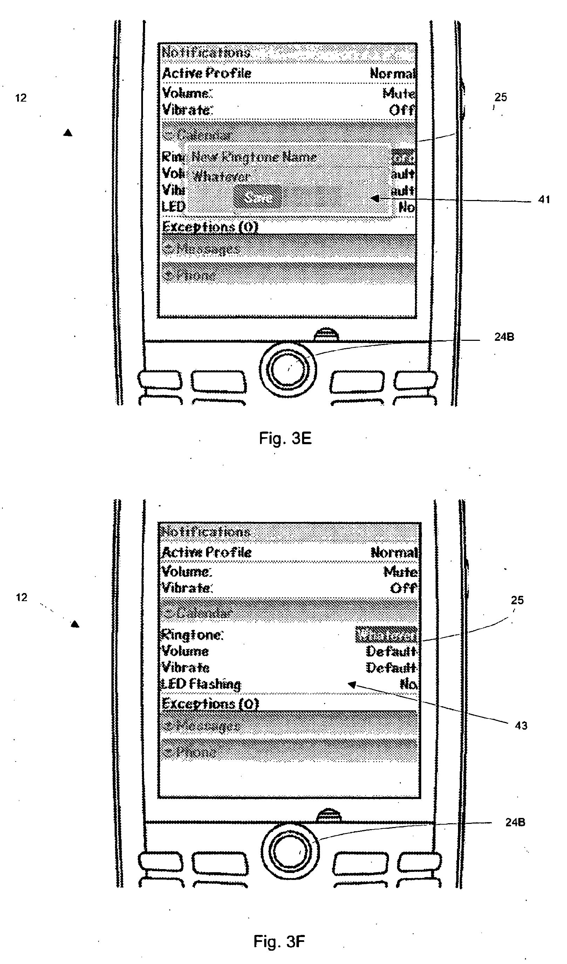

As shown in Figure 3C, upon completing the recorded audio sample the user may press a "Stop" button via a window (37) and then "Save" the recording with a user selected file name (73) via further windows (39 and 41) as shown in Figures 3D and 3E. The display then returns to the expanded Calendar Notifications screen (Figure 3F), where the audio file name (e.g. "Whatever") is indicated in the "Ringtone:" field of a window (43).

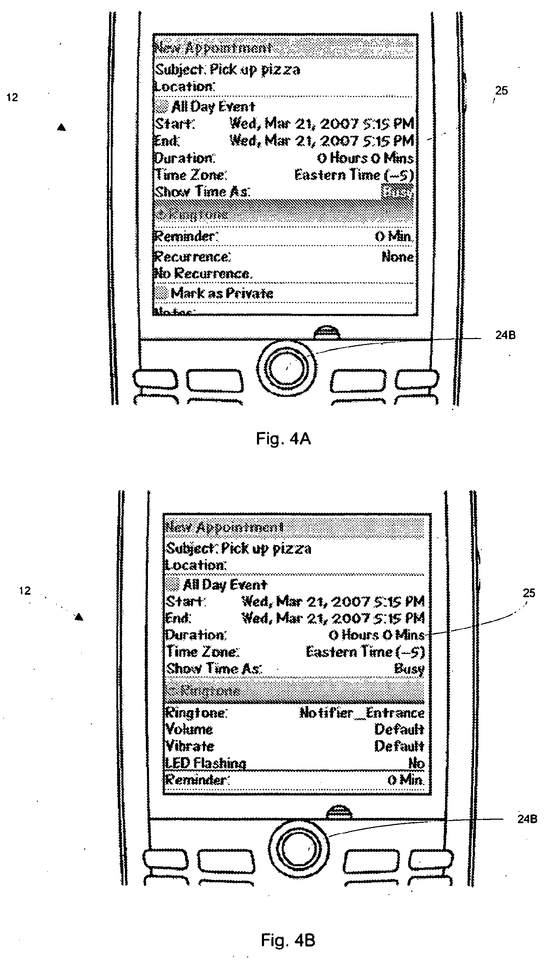

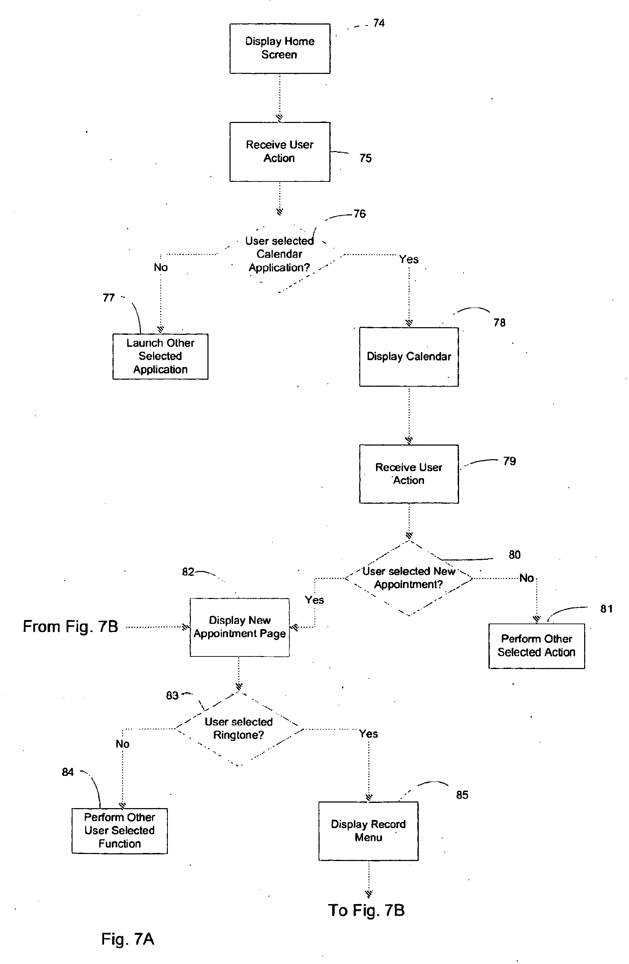

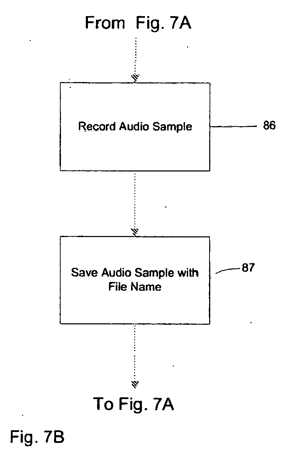

According to a second aspect of this detailed description, as shown in Figures 4A - 4E and as further depicted in Figures 7A and 7B, portable electronic device 12 may also be used to create and associate an audible notification for a specific calendar event (e.g. "Pick up pizza" at 5:15 PM on Wed, Mar 21, 2007), as an alternative, for example, to the default notification discussed above in connection with Figures 3A- 3F and Figures 6A and 6B.

With reference to Figure 7A, in an idle or default state for device 12, a home screen (not shown) is displayed (74) from which a user may launch various applications by selecting associated icons on display 25. Upon making a selection (75), a determination is made (76) as to whether the user has selected to launch the Calendar application. If not, the device 12 launches another application associated with the user selected icon (77). If the user has selected to launch the Calendar application, a conventional calendar user interface is displayed (not shown), from which the user may select among a plurality of actions (e.g. Open Appointment, New Appointment, etc.) In response to such a user selection (79), a determination is made (80) as to whether the user has selected to make a New Appointment or take some other specified action (81), such as cancelling out of the Calendar application, etc.

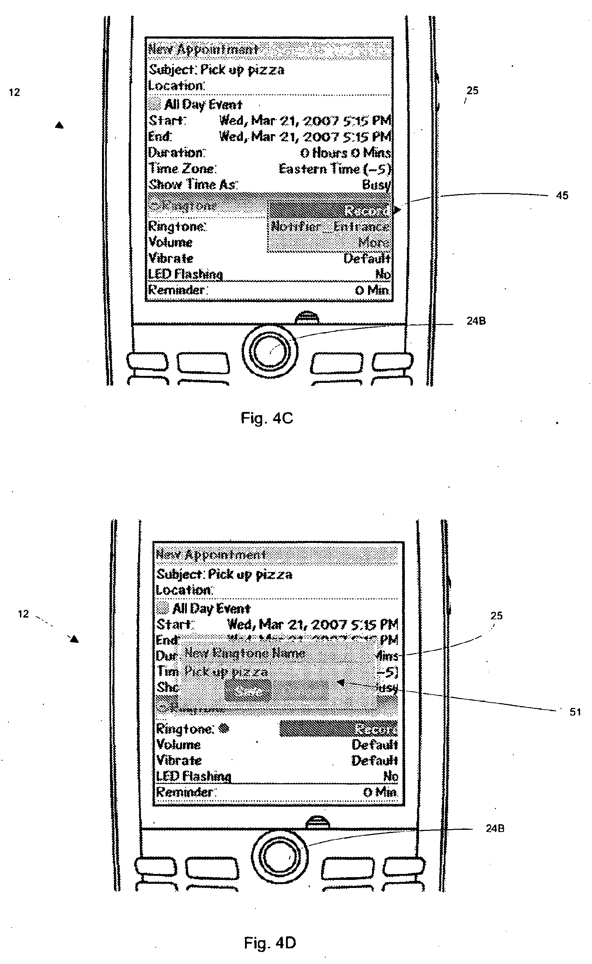

In response to user selection to make a New Appointment, the user may expand the Ringtone label (Figure 4A) resulting in an expanded display (Figure 4B), as discussed above. From within the expanded display, the user may select a Ringtone field (a "Yes" at 83) of the expanded display in response to which a "Record" function is presented (85) from a pop-up menu window (45), as shown in Figure 4C, for selecting an existing ring tone (e.g. "Notifier_Entrance") or recording a custom audio sample (86) as a notification for the new calendar Appointment. For example, the user may record a spoken description of the event, such as "Pick Up Pizza", using his/her own voice. Otherwise, another selected function is performed (84).

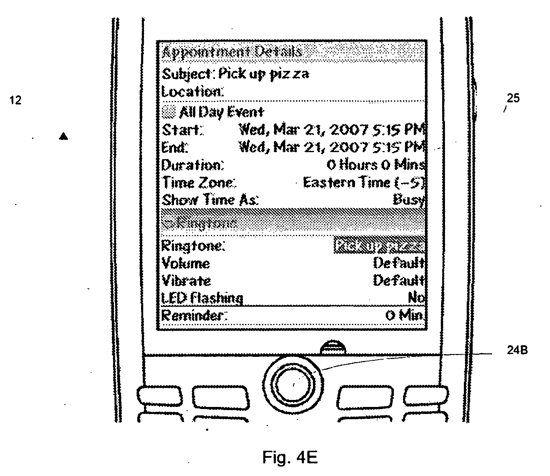

As shown in Figure 4D, upon completing the recorded audio sample the user may "Save" the recording, with a user selected file name (87), via a further pop-up menu window (51). The display then returns to the expanded Appointment screen (Figure 4E), where the audio file name is indicated in the "Ringtone:" field and the page header has been updated to "Appointment Details".

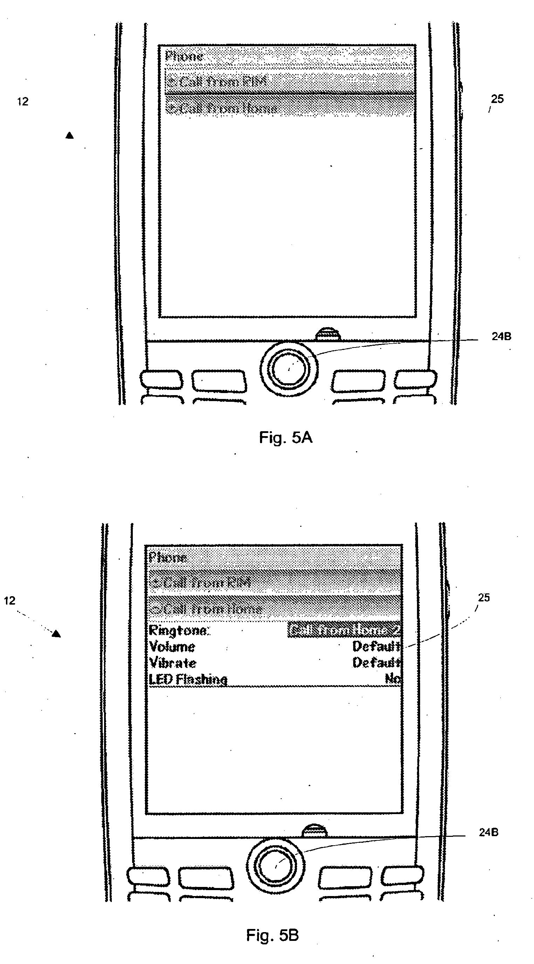

A person of ordinary skill in the art will understand that a plurality of such customized ring tones may be recorded for providing informative notifications of multiple events according to the methodology and exemplary user interfaces set forth above. For example, as shown in Figures 5A and 5B, a user may record customized audio samples to be used as notifications for incoming calls from work or from home, based on CLID data associated with the incoming calls. In Figure 5B, a custom ring tone is identified by the file name "Call from Home 2" which can, for example, be an audio sample of the user, announcing "Call from home", or an audio sample of a party associated with the event, such as the user's spouse or partner, announcing "Honey, its me!". Likewise, an email from an important client may be identified by a custom ring tone in the user's voice, such as "Email from Bob at XYZ Co."
Specific embodiments have been shown and described herein. However, modifications and variations may occur to those skilled in the art. For example, as discussed above, although the exemplary embodiment has been described in terms of implementation on a portable handheld electronic device, the principles set forth herein may be applied to other devices such as desktop computers, etc. All such modifications and variations are believed to be within the sphere and scope of the present embodiment.

## Claims

1. A user interface for an electronic device (12), comprising:
an input device (24);
a first window display (25) generated responsive to a first input to said input device (24) for associating an audible notification with a specific event on said electronic device (12), said specific event comprising one of a calendar appointment, an incoming call, an incoming email, and a task;
a second window display (35) generated within and overlapping said first window display (25) responsive to a second input to said input device (24) for activating a record function to record an audio file; and
a third window display (41) generated within and overlapping said first window display responsive to a third input to said input device (24) for saving said audio file as said audible notification associated with said specific event such that said audible notification is automatically provided at said electronic device, when said specific event occurs, as an informative notification of said specific event.

2. A user interface as claimed in claim 1, wherein the second window display (35) and the third window display (41) are generated subsequent to said first window display (25).

3. A user interface as claimed in claim 1 or claim 2, wherein said audio file is a spoken description of said specific event.

4. A user interface as claimed in claim 3, wherein said spoken description is recorded by a user of said electronic device (12) or a party associated with said specific event.

5. A user interface as claimed in any one of the preceding claims, wherein said audio file is saved as a ring tone on said electronic device (12).

6. A method of operating an electronic device (12), comprising:
displaying a first user interface window (25) on said electronic device (12) for associating an audible notification with a specific event on said electronic device (12), said specific event comprising one of a calendar appointment, an incoming call, an incoming email, and a task;
displaying a second user interface window (35) generated within and overlapping said first user interface window (25) for activating a record function from said first user interface window (25) for recording an audio file; and
displaying a third user interface window (41) generated within and overlapping said first user interface window (25) for saving said audio file as said audible notification associated with said specific event such that said audible notification is automatically provided at said electronic device (12), when said specific event occurs, as an informative notification of said specific event.

7. A method as claimed in claim 6, wherein said audio file is a spoken description of said specific event.

8. A method as claimed in claim 7, wherein said spoken description is recorded by a user of said electronic device (12) or a party associated with said specific event.

9. A method as claimed in any one of claims 6 to 8, wherein said audio file is saved as a ring tone on said electronic device (12).

10. A computer readable medium containing computer-executable instructions that, when performed by a processor (20), cause said processor (20) to implement the method of any one of claims 6 to 9.

## Patentansprüche

1. Eine Benutzerschnittstelle für eine elektronische Vorrichtung (12), die aufweist:
eine Eingabevorrichtung (24);
eine erste Fenster-Anzeige (25), die erzeugt wird in Reaktion auf eine erste Eingabe in die Eingabevorrichtung (24) zum Zuordnen einer hörbaren Benachrichtigung zu einem spezifischen Ereignis auf der elektronischen Vorrichtung (12), wobei das spezifische Ereignis eines aus einem Kalendertermin, einem eingehenden Anruf, einer eingehenden Email und einer Aufgabe aufweist;
eine zweite Fenster-Anzeige (35), die in und überlappend mit der ersten Fenster-Anzeige (25) in Reaktion auf eine zweite Eingabe in die Eingabevorrichtung (24) erzeugt wird, zum Aktivieren einer Aufzeichnungsfunktion, um eine Audiodatei aufzuzeichnen; und
eine dritte Fenster-Anzeige (41), die in und überlappend mit der ersten Fenster-Anzeige in Reaktion auf eine dritte Eingabe in die Eingabevorrichtung (24) erzeugt wird, zum Speichern der Audiodatei als die hörbare Benachrichtigung, die mit dem spezifischen Ereignis assoziiert ist, derart, dass die hörbare Benachrichtigung an der elektronischen Vorrichtung automatisch, wenn das spezifische Ereignis auftritt, als eine informative Benachrichtigung über das spezifische Ereignis vorgesehen wird.

2. Eine Benutzerschnittstelle gemäß Anspruch 1, wobei die zweite Fenster-Anzeige (35) und die dritte Fenster-Anzeige (41) nachfolgend auf die erste Fenster-Anzeige (25) erzeugt werden.

3. Eine Benutzerschnittstelle gemäß Anspruch 1 oder Anspruch 2, wobei die Audiodatei eine gesprochene Beschreibung des spezifischen Ereignisses ist.

4. Eine Benutzerschnittstelle gemäß Anspruch 3, wobei die gesprochene Beschreibung durch einen Benutzer der elektronischen Vorrichtung (12) oder einen Beteiligten, der mit dem spezifischen Ereignis assoziiert ist, aufgezeichnet wird.

5. Eine Benutzerschnittstelle gemäß einem der vorhergehenden Ansprüche, wobei die Audiodatei als ein Klingelton auf der elektronischen Vorrichtung (12) gespeichert wird.

6. Ein Verfahren zum Betreiben einer elektronischen Vorrichtung (12), das aufweist:
Anzeigen eines ersten Benutzerschnittstelle-Fensters (25) auf der elektronischen Vorrichtung (12) zum Zuordnen einer hörbaren Benachrichtigung zu einem spezifischen Ereignis auf der elektronischen Vorrichtung (12), wobei das spezifische Ereignis eines aus einem Kalendertermin, einem eingehenden Anruf, einer eingehenden Email und einer Aufgabe aufweist;
Anzeigen eines zweiten Benutzerschnittstelle-Fensters (35), das in und überlappend mit dem ersten Benutzerschnittstelle-Fenster (25) erzeugt wird, zum Aktivieren einer Aufzeichnungsfunktion aus dem ersten Benutzerschnittstelle-Fenster (25), um eine Audiodatei aufzuzeichnen; und
Anzeigen eines dritten Benutzerschnittstelle-Fensters (41), das in und überlappend mit dem ersten Benutzerschnittstelle-Fenster (25) erzeugt wird, zum Speichern der Audiodatei als die hörbare Benachrichtigung, die mit dem spezifischen Ereignis assoziiert ist, derart, dass die hörbare Benachrichtigung an der elektronischen Vorrichtung (12) automatisch, wenn das spezifische Ereignis auftritt, als eine informative Benachrichtigung über das spezifische Ereignis vorgesehen wird.

7. Ein Verfahren gemäß Anspruch 6, wobei die Audiodatei eine gesprochene Beschreibung des spezifischen Ereignisses ist.

8. Ein Verfahren gemäß Anspruch 7, wobei die gesprochene Beschreibung durch einen Benutzer der elektronischen Vorrichtung (12) oder einen Beteiligten, der mit dem spezifischen Ereignis assoziiert ist, aufgezeichnet wird.

9. Ein Verfahren gemäß einem der Ansprüche 6 bis 8, wobei die Audiodatei als ein Klingelton auf der elektronischen Vorrichtung (12) gespeichert wird.

10. Ein computerlesbares Medium, das computerausführbare Anweisungen enthält, die bei Ausführung durch einen Prozessor (20) den Prozessor (20) veranlassen, das Verfahren gemäß einem der Ansprüche 6 bis 9 zu implementieren.

## Revendications

1. Interface utilisateur pour un dispositif électronique (12), comprenant :
un dispositif d'entrée (24)
un premier affichage fenêtre (25) qui est produit en réponse à une première entrée sur ledit dispositif d'entrée (24) afin d'associer une notification audible à un événement spécifique sur ledit dispositif électronique (12), ledit événement spécifique consistant en un rendez-vous de l'agenda, un appel entrant, un courriel entrant ou une tâche ;
un deuxième affichage fenêtre (35) qui est produit dans ledit premier affichage fenêtre (25) et en s'y superposant, en réponse à une deuxième entrée sur ledit dispositif d'entrée (24) afin d'activer une fonction d'enregistrement pour enregistrer un fichier audio ; et
un troisième affichage fenêtre (41) qui est produit dans ledit premier affichage fenêtre et en s'y superposant, en réponse à une troisième entrée sur ledit dispositif d'entrée (24) afin de sauvegarder ledit fichier audio pour constituer ladite notification audible associée audit événement spécifique, de manière à ce que ladite notification audible soit automatiquement produite sur ledit dispositif électronique lorsque ledit événement spécifique a lieu, pour constituer une notification dudit événement spécifique à titre d'information.

2. Interface utilisateur selon la revendication 1, dans laquelle le deuxième affichage fenêtre (35) et le troisième affichage fenêtre (41) sont produits après ledit premier affichage fenêtre (25).

3. Interface utilisateur selon la revendication 1 ou la revendication 2, dans laquelle ledit fichier audio est une description parlée dudit événement spécifique.

4. Interface utilisateur selon la revendication 3, dans laquelle ladite description parlée est enregistrée par un utilisateur dudit dispositif électronique (12) ou par une partie associée audit événement spécifique.

5. Interface utilisateur selon l'une quelconque des revendications précédentes, dans laquelle ledit fichier audio est enregistré comme une tonalité dudit dispositif électronique (12).

6. Procédé de fonctionnement d'un dispositif électronique (12), comprenant les étapes consistant à :
afficher une première fenêtre de l'interface utilisateur (25) sur ledit dispositif électronique (12) afin d'associer une notification audible à un événement spécifique sur ledit dispositif électronique (12), ledit événement spécifique consistant en un rendez-vous de l'agenda, un appel entrant, un courriel entrant ou une tâche ;
afficher une deuxième fenêtre de l'interface utilisateur (35) qui est produite dans ladite première fenêtre de l'interface utilisateur (25) et en s'y superposant, afin d'activer une fonction d'enregistrement dans la première fenêtre de l'interface utilisateur (25) pour enregistrer un fichier audio ; et
afficher une troisième fenêtre de l'interface utilisateur (41) qui est produite dans ladite première fenêtre de l'interface utilisateur (25) et en s'y superposant, afin de sauvegarder ledit fichier audio pour constituer ladite notification audible associée audit événement spécifique, de manière à ce que ladite notification audible soit automatiquement produite sur ledit dispositif électronique (12) lorsque ledit événement spécifique a lieu, pour constituer une notification dudit événement spécifique à titre d'information.

7. Procédé selon la revendication 6, dans lequel ledit fichier audio est une description parlée dudit événement spécifique.

8. Procédé selon la revendication 7, dans lequel ladite description parlée est enregistrée par un utilisateur dudit dispositif électronique (12) ou par une partie associée audit événement spécifique.

9. Procédé selon l'une quelconque des revendications 6 à 8, dans lequel ledit fichier audio est enregistré comme une tonalité dudit dispositif électronique (12).

10. Support lisible par ordinateur contenant des instructions exécutables par ordinateur qui, lorsqu'elles sont exécutées par un processeur (20), commandent audit processeur (20) de mettre en oeuvre le procédé selon l'une quelconque des revendications 6 à 9.
